# DEMANDE DE BREVET EUROPEEN

(11) **EP 1 229 637 A2**
(43) Date de publication de la demande: **07.08.2002**
(21) Numéro de dépôt: 01205116.5
(22) Date de dépôt: 21.12.2001
(51) Int. Cl.: H02P 5/40

(54) **Système de limitation du courant en sortie d'un variateur de vitesse**

(30) Priorité: 27.12.2000 FR 0017344
(71) Demandeur: Schneider Electronic Industries SAS, 92500 Rueil-Malmaison (FR)
(72) Inventeur: Nguyen Phuoc, Vinh Tung, 92100 Boulogne Billancourt (FR); Youssef, Ayman, 38100 Grenoble (FR); Canuda De Wit, Carlos, 38330 Saint Ismier (FR)

(57) **Abrégé**

La présente invention concerne un système de limitation du courant en sortie d'un variateur de vitesse pour moteurs électriques asynchrones triphasés, comprenant un onduleur de type MLI dont les interrupteurs électroniques sont pilotés par un circuit à microcontrôleur (Mc), caractérisé par le fait que le circuit à microcontrôleur comporte des moyens (LIC) pour calculer, à partir des mesures des courants de phases du moteur, le module du vecteur courant et le comparer avec une consigne de limitation de manière à obtenir une erreur de limitation (y) et pour calculer une tension de correction (ΔV) qui est ajoutée à la tension (V) de commande appliquée au moteur.

## Description

La présente invention concerne un système de limitation du courant en sortie d'un variateur de vitesse pour moteurs électriques asynchrones triphasés comprenant un pont onduleur dont les interrupteurs électroniques sont pilotés par un microcontrôleur.

Un variateur de vitesse pour moteur asynchrone triphasé comprend un onduleur de tension associé à une redresseur non contrôlé et à un filtre capacitif. Un onduleur usuel est commandé en Modulation de Largeur d'Impulsions ce qui consiste à délivrer au moteur une suite d'impulsions d'amplitude fixe, positive ou négative et modulées en largeur. Il existe plusieurs procédés pour réaliser la Modulation de Largeur d'Impulsions. Dans la modulation sinus-triangle, on compare une onde de référence sinusoïdale ayant la fréquence de la tension désirée et une amplitude proportionnelle à celle-ci avec une onde de modulation triangulaire de fréquence nettement plus élevée. Les intersections des deux courbes donnent en temps réel les instants de fermeture et d'ouverture des interrupteurs électroniques faisant partie de l'onduleur. La modulation à hystérésis est un autre procédé pour réaliser la Modulation de Largeur d'Impulsions.

Le brevet US 4904919 décrit un système combinant les avantages de l'onduleur MLI sinus-triangle et les avantages du MLI - hystérésis. Un circuit mesure le courant et le compare à une valeur limite pour le courant en positif, et à une valeur en négatif. Si le courant dépasse sa valeur limite en positif, on ajoute à la référence de courant une valeur négative prédéterminée. Si le courant revient inférieur à cette limite, l'action de ladite valeur négative reste toujours validée. Dans la phase de descente, il y a un seuil au dessous duquel on désactive l'action de la valeur négative.

Dans ce système dual, la modulation hystérésis fonctionne en série avec la modulation sinus - triangle. Si le courant est inférieur à sa limite, la modulation hystérésis est inactive et la modulation sinus - triangle active. Par contre, s'il y a un dépassement, la modulation hystérésis est active dans le sens qu'elle modifie la courant de référence qui agit ensuite sur la boucle de régulation, agissant donc sur la tension de référence de *MLI*. Autrement dit, la commutation vers le mode hystérésis se traduit pratiquement par son activation, et la commutation dans l'autre sens se traduit par son désactivant, tout en laissant la *MLI* sinus - triangle active.

Cette solution écrête le courant dans chaque phase séparément, ce qui induit un couple moteur vibratoire. Le courant oscille dans une large bande, ce qui génère des oscillations additionnelles du couple et diminue ainsi beaucoup l'efficacité du moteur.

Au niveau des composants de l'onduleur, si on fait la limitation sur chaque phase indépendamment, on arrive à protéger chaque composant de puissance (interrupteurs, diodes) de l'onduleur à part. Mais la puissance totale dissipée dépend directement du module du vecteur courant. Ce module du vecteur courant reste toujours supérieur à la valeur limite et les composants de puissance sont ainsi plus sollicités et leur durée de vie risque d'en être affectée.

La présente invention a pour but de fournir une fonction de limitation instantanée du courant en sortie du variateur conservant les courants sinusoïdaux. Cette fonction est réalisée par logiciel et microcontrôleur, indépendamment du type de la commande principale du variateur. Elle protège le pont onduleur, supprime les ondulations de couple et améliore ainsi la durée de vie du moteur. Aucun composant matériel supplémentaire n'est requis, l'implantation de la limitation de courant ne demande qu'un petit espace mémoire et un peu de temps d'exécution du microcontrôleur. La limitation de courant est plus fiable, plus intelligente et moins coûteuse. Pendant la limitation le module du vecteur courant est maintenu égal à la valeur limite, ce qui favorise la durée de vie des composants de puissance de l'onduleur.

Le système selon l'invention est caractérisé par le fait que le circuit à microcontrôleur comporte des moyens pour calculer, à partir des mesures des courants de phases du moteur, le module du vecteur courant et le comparer avec une consigne de limitation de manière à obtenir une erreur de limitation et pour calculer une tension de correction qui est ajoutée à la tension de commande appliquée au moteur.

Selon une caractéristique, le système comporte des moyens pour, à partir de l'erreur de limitation, calculer, à l'aide d'un régulateur à action intégrale, une variable de commande et des moyens pour multiplier cette variable de commande par les courants de phase de manière à obtenir la tension de correction par phase de manière à obtenir des couarants sinusoïdaux en limitation.

L'invention va maintenant être décrite avec plus de détail en se référant à un mode de réalisation donné à titre d'exemple et représenté par les dessins annexés sur lesquels :
- la figure 1 est un schéma fonctionnel d'onduleur équipé du système de limitation de courant selon l'invention ;
- la figure 2 est un schéma synoptique du système de limitation de courant selon l'invention ;
- la figure 3 est un diagramme donnant des caractéristiques en fonction du temps pour un onduleur sans système de limitation de courant lors d'une phase de démarrage à vide;
- la figure 4 est un diagramme donnant des caractéristiques en fonction du temps pour un onduleur selon l'invention lors d'une phase de démarrage à vide.

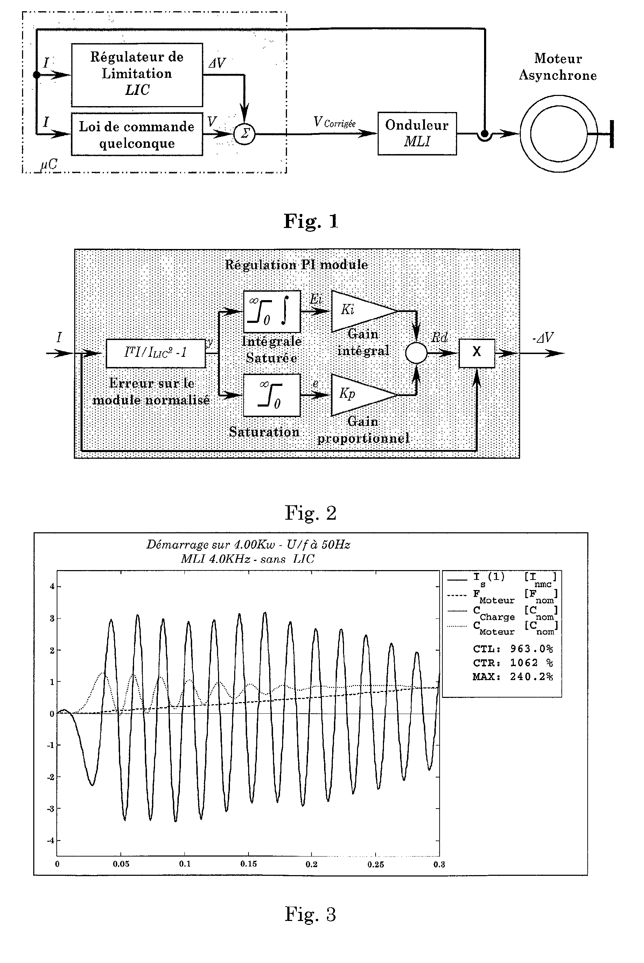

En se référant à la figure 1, le variateur comporte un onduleur de type MLI délivrant les impulsions au moteur asynchrone et associé à une loi de commande en tension quelconque (scalaire, vectorielle, etc..). Les interrupteurs électroniques de cet onduleur sont pilotés par un circuit de contrôle comportant notamment un microcontrôleur Mc.

Le circuit à microcontrôleur Mc reçoit périodiquement les signaux de courants I fournis par des capteurs Ci dans les phases du moteur. Ces courants sont traités par une fonction de limitation LIC illustré à la figure 2.

La fonction de limitation LIC détermine le module du vecteur courant, en calculant la racine carrée de la somme des carrés de chaque courant de phase. Ensuite elle compare le module du vecteur courant avec une consigne de limitation et calcule la différence ou erreur de limitation notée y qui est un scalaire.

A partir de l'erreur de limitation y, la fonction de limitation LIC calcule, à l'aide d'un régulateur à action intégrale PI, une variable de commande Rd (qui est homogène à une résistance ohmique)

La fonction de limitation du courant LIC comporte des moyens de saturation empêchant la variable de commande Rd de prendre une valeur négative.

La fonction de limitation du courant LIC multiplie la variable de commande Rd par les courants de phase de manière à délivrer une tension de correction ΔV pour chaque phase, Cette tension de correction ΔV est retranchée de la référence de tension V délivrée par la loi de commande pour fournir les tensions de référence corrigées V _{Corrigée} qui sont appliquées au moteur via l'onduleur. De cette manière les courants restent sinusoïdaux même en limitation.

Les gains du régulateur PI peuvent être déterminés analytiquement en se basant sur les paramètres du moteur. Les gains sont déterminés de telle manière que le régulateur reste robuste même si les paramètres du moteur changent.

La fréquence d'appel de la fonction LIC est suffisamment grande pour que les courants soient limités instantanément.

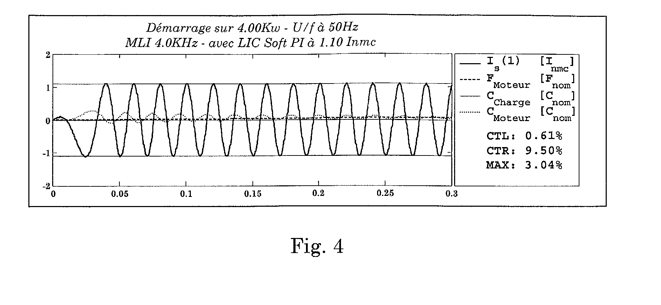

Les figures 3 et 4 illustrent un exemple de résultat obtenu avec la fonction de limitation LIC selon l'invention.

La figure 3 représente le démarrage à vide d'un moteur asynchrone sous tension et fréquence nominales sans la fonction de limitation LIC. Le courant en crête dans une phase atteint trois fois le courant crête nominal du moteur (courbe Is).

Sur la figure 4 le démarrage s'effectue avec cette fonction LIC et le courant limite fixé à 1,1 fois la valeur nominale. Le courant dans une phase est bien limité à cette valeur (courbe Is) et reste parfaitement sinusoïdal.

Il est bien entendu que l'on peut sans sortir du cadre de l'invention imaginer des variantes et des perfectionnements de détail et envisager l'emploi de moyens équivalents.

Le système selon l'invention peut s'appliquer à un variateur avec ou sans capteur de vitesse. La fonction réalisée par un microcontrôleur pourrait être réalisée à l'aide de composants électroniques.

## Revendications

1. Système de limitation du courant en sortie d'un variateur de vitesse pour moteurs électriques asynchrones triphasés, comprenant un onduleur de type MLI dont les interrupteurs électroniques sont pilotés par un circuit à microcontrôleur (Mc), **caractérisé par le fait que** le circuit à microcontrôleur comporte des moyens (LIC) pour calculer, à partir des mesures des courants de phases du moteur, le module du vecteur courant et le comparer avec une consigne de limitation de manière à obtenir une erreur de limitation (y) et pour calculer une tension de correction (ΔV) qui est ajoutée à la tension (V) de commande appliquée au moteur.

2. Système selon la revendication 1, **caractérisé par le fait qu'**il comporte des moyens pour, à partir de l'erreur de limitation (y), calculer, à l'aide d'un régulateur à action intégrale (PI) une variable de commande (Rd) et des moyens pour multiplier cette variable de commande (Rd) par les courants de phase de manière à obtenir la tension de correction (ΔV) par phase et à obtenir des courants sinusoïdaux en limitation.

3. Système selon la revendication 1 ou 2, **caractérisé par le fait que** les moyens pour calculer le module du vecteur courant calculent la racine carrée de la somme des carrés de chaque courant de phase.
